# EUROPEAN PATENT SPECIFICATION

(11) **EP 3 084 330 B1**
(45) Date of publication and mention of the grant of the patent: **22.07.2020**
(21) Application number: 14812651.9
(22) Date of filing: 25.11.2014
(51) Int. Cl.: F27B 9/24, F27B 9/30, F27D 17/00

(54) **PLANT FOR THE RECOVERY OF HEAT FROM A FIRING KILN**
ANLAGE ZUR RÜCKGEWINNUNG VON WÄRME AUS EINEM BRENNOFEN
ÉQUIPEMENT PERMETTANT LA RÉCUPÉRATION DE LA CHALEUR D'UN FOUR DE CUISSON

(30) Priority: 20.12.2013 IT MO20130353
(43) Date of publication of application: 26.10.2016
(73) Proprietor: Balderacchi, Gian Paolo, 42048 Rubiera (Reggio Emilia) (IT); Rusce, Cosimo, 42048 Rubiera (Reggio Emilia) (IT); Ruini, Primo, 42013 Casalgrande (Reggio Emilia) (IT); Gibertini, Enrico, 42122 Reggio Emilia (IT)
(72) Inventor: BALDERACCHI, Gian Paolo, I-42048 Rubiera (reggio Emilia) (IT)
(74) Representative: Gagliardelli, Fabrizio
(86) International application number: PCT/IB2014/066316
(87) International publication number: WO 2015/092578

(56) References cited:
- CN-A- 101 762 154
- CN-U- 201 785 340
- CN-U- 201 885 554
- DE-A1- 3 923 887
- DE-A1- 4 023 432
- DE-A1- 4 328 301
- DE-A1- 4 344 214

## Description

The present invention relates to a plant for the recovery of heat from firing kilns in the ceramic industry.

The prior art includes firing kilns for tiles, masonry articles, porcelain and other ceramic items, which have one or more firing sections, downstream of which one or more cooling sections are arranged.

In detail, as it is known, a firing kiln can include the following cooling sections, in succession: rapid cooling zone, slow cooling zone, neutral zone and final rapid cooling zone.

In the cited cooling zones, the temperature of the ceramic articles is lowered by injection internally of the kiln of air coming from the outside or from the inside of the factories housing the kiln (typically a shed).

In detail, it is known the use of air/air exchangers which extend within the cooling zones, arranged below the upper vaults of the various cooling sections of the kiln.

The air exiting from these exchangers, which has a temperature approximately varying between 170 °C and 200 °C according to the section which it has been removed from, is then exploited to heat buildings or to supply dryers.

Though the above-illustrated known system is partially able to recover and reutilise the heat produced in the firing kilns, it is broadly inefficient.

In fact, the known system is able to recover only a minimum part of the heat transmitted or radiated in the cooling zones of the kiln, but the majority of this heat is dispersed and, therefore, not utilised.

CN201785340 discloses a tunnel kiln for curing tiles, having a cooling section, provided with heat exchange pipes, arranged on the inner surfaces of the sidewalls of the cooling section itself; this prior art document teaches to provide exchange pipes at the side of the zone where the tiles are transported.

CN201885554 describes a tunnel kiln equipment for burning ceramics and bricks having a cooling section provided with stirring means.

For economic, energy-efficiency and environmental reasons, the need to develop a way of recovering more efficiently the heat dissipated in the cooling sections of the ceramic items has been felt for a long time.

The technical aim behind the present invention is therefore to provide a plant for the recovery of heat from a firing kiln which satisfies the above-cited need and obviates the drawbacks of the prior art.

Such technical aim is attained by a plant for the recovery of heat made according to claim 1.

Further characteristics and advantages of the present invention will more fully emerge from the indicative description given by way of non-limiting example of preferred but not exclusive embodiments of the plant of the invention, as illustrated in the accompanying drawings, in which:
- figure 1 is a schematic representation in plan view of a roller firing kiln, in which a plant according to the invention is implemented, subdivided into three parts for reasons of clarity in the representation;
- figure 2 is a schematic representation in plan view of a module of the kiln of figure 1; and
- figures 3 and 4 are schematic views in transversal section of the kiln of the preceding figures, to which two distinct embodiments of the proposed plant are applied.

With reference to the cited figures, 1 denotes in its entirety the plant of the invention.

The proposed plant 1 has been developed for the recovery of heat from a firing kiln 2 for the production of ceramic items, such as tiles, masonry articles, ceramic articles, etc.

In the following, for reasons of simplicity of description, reference will be made, without losing in terms of generality, to the preferred but non-limiting case of application of the invention to kilns 2 for the firing of ceramic items.

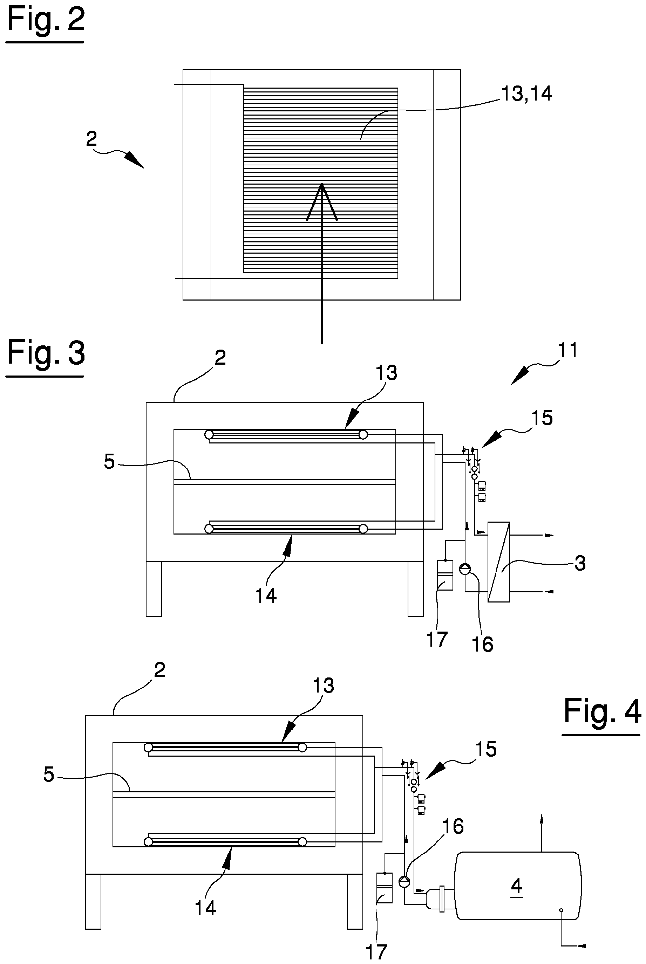

The kiln 2 has a usual longitudinal shape, for example defined by a plurality of modules aligned in succession, and comprises internally thereof a roller conveyor 5 (illustrated schematically in figures 3 and 4) which supports and transports the ceramic items.

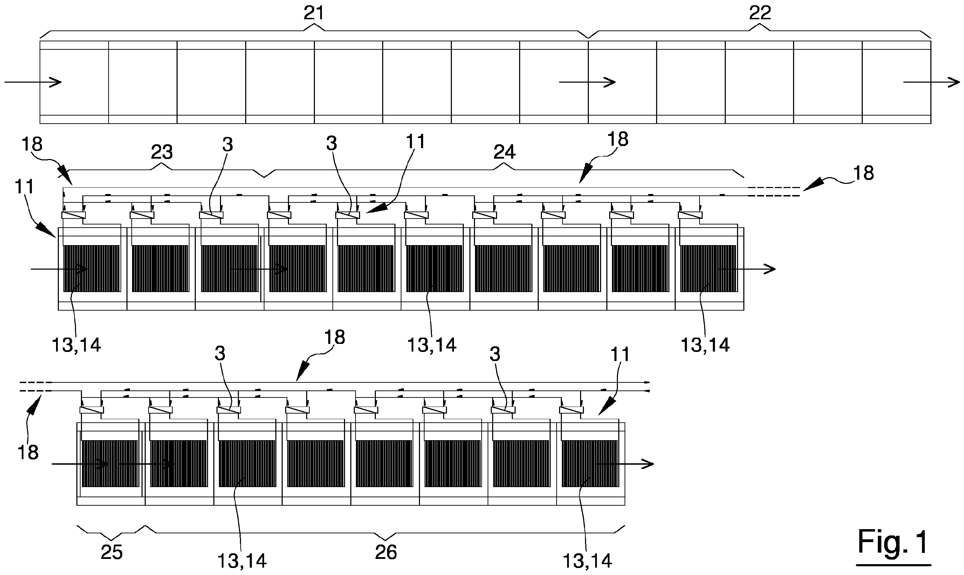

As shown in figure 1, a type of kiln 2 in which the proposed plant 1 can be applied comprises, in succession: a pre-kiln section (not illustrated), a preheating section 21, a firing section 22 provided with burners, a rapid cooling section 23, a slow cooling section 24, a neutral zone 25 and a final cooling section 26.

In its more general aspects, the proposed plant 1 comprises at least a primary circuit 11, 12 which comprises a respective internal heat exchanger 13, 14 destined to be arranged in one of the cooling sections of the kiln 2.

The plant 1 preferably comprises a plurality of primary circuits 11, 12, each provided with an internal heat exchanger or heat exchangers distributed along the longitudinal development of the cooling sections of the kiln 2.

In the present description, by the generalised term "cooling sections" are meant the terminal zone of the kiln 2 which includes the assembly of: the rapid cooling section 23, the slow cooling section 24, the neutral zone 25 and the final cooling section 26.

In a very important aspect of the invention, the plant 1 comprises a primary process liquid that flows in said primary circuit 11, 12, which can be constituted by superheated water following the passage in the heat exchanger, or by molten salts or by another suitable liquid.

Clearly the primary circuit 11, 12 comprises at least a delivery branch to carry the primary liquid into the internal exchanger 13, 14 located in the kiln 2 and a return branch to extract the liquid at a high temperature.

In the case of a modular kiln 2, the plant 1 can advantageously include a primary circuit 11, 12 for each module, consequently defining a modular plant 1.

Therefore, in accordance with the specific design or constructional requirements primary circuits 11, 12 can be installed, as a choice, only in some but not in all modules of the kiln 2.

Further, the primary circuits 11, 12 can work with the same primary liquid or can be provided with different primary liquids.

The internal exchanger 13, 14 can be of the tube bundle type, finned tube type or can be of another type.

The internal exchanger 13, 14 is preferably made of carbon steel or stainless steel or other suitable materials for the use destination thereof.

Given that the cited primary liquid enables a much higher heat exchange performance than air, the plant 1 of the invention is able to extract heat from the cooling sections of the kiln 2 much more efficiently than the prior art.

In more precise terms, the internal heaters of the plant 1 are able to receive both the heat emanated by transmission and the heat radiated by the kiln 2 itself.

Note that as great quantities of heat are inevitably produced in kilns for firing ceramic items, and as it is necessary to lower the temperature of the ceramic items considerably before removing them from the kiln 2, the invention simultaneously attains two results.

On the one hand, heat is accumulated in the primary liquid which otherwise would be dispersed and wasted, and also the cooling process of the ceramic items is made more efficient and rapid.

As will be more fully detailed in the following, the heat collected by means of the plant 1 of the invention is used to reduce the energy requirements of the factories housing the firing kilns, with consequences in terms of economic savings and reduction of pollution.

In fact, these factories are notoriously energy-consuming and therefore expensive and, in the final analysis, polluting; therefore, an efficient recovery of heat from the kiln 2 enables both reduction of production costs and reduction of the ecological footprint.

Each primary circuit 11, 12 preferably comprises a first and a second internal exchanger 13, 14, the first exchanger 13 being arranged above a roller plane of the conveyor 5, and the second exchanger 14 being arranged below (see figures 3 and 4).

To be precise, the plant 1 can be implemented on an already-existing kiln 2 or can be incorporated in the kiln 2 during production.

In the first case, the retrofitting of the kiln 2 can be actuated even if it includes the air/air exchanger of the prior art.

In fact, the first internal exchanger 13 of the invention can be arranged between the air/air exchanger and the ceiling of the vault of the kiln 2, the second internal exchanger 14 being in any case installable below the roller plane of the conveyor 5.

Therefore, the recovery of heat from the cooling sections of a firing kiln 2 may be done by means of a retrofitting of the kiln 2.

The primary circuits 11, 12 are completed by a thermodynamic device arranged externally of the kiln 2 which is preferably constituted either by a heat exchanger 3 (see figure 3) or by a thermal evaporator 4 (see figure 4).

In practice, each module of the kiln 2 will be associated to its own primary circuit 11, 12 which includes one or more internal exchangers fluid-dynamically connected to an external device which can be, by way of non-exclusive example, a further exchanger 3 or a thermal evaporator 4.

As can be seen in figures 3 and 4, to each primary circuit 11, 12 are associated the safety devices necessary according to the sector standards relating to pressurised fluid, such as thermostats, safety valves, heat discharge valves, pressure switches, manometers, thermometers, or others besides (denoted in their entirety by reference numeral 15 in the appended design tables).

A circulation pump 16 is also present for the primary liquid, as well as an expansion tank 17 adequate for the maximum expansion of the chosen liquid.

In the preferred embodiment of the invention, shown in figure 1, the proposed plant 1 further includes a secondary circuit 18, external of the kiln 2, which associates the primary circuits 11, 12 in parallel.

In detail, the secondary circuit 18 is connected to the external exchangers 3 or the thermal evaporators 4 of the primary circuits 11, 12.

A secondary process fluid flows in the secondary circuit 18, which fluid is, for example, saturated steam, superheated steam, diathermic oil or superheated water.

In the example of figure 1, the plant 1 has been installed in the kiln 2 in such a way that the parallel connection of the secondary circuit 18 is achieved by grouping four primary circuits 11, 12 at a time, the outlet fluid from the first group (characterised by a lower temperature) entering the second group (where there is a higher temperature) and so on.

However, this is simply intended as a constructional example and is not limiting in character.

The same is true owing to the fact that the circuiting can be carried out with a three-tube system with inverse return, in order to balance the load losses; in this case too the choices of a merely constructional type can be made as a function of the specific applications.

Downstream of the plant 1 at least a user device is present, supplied by the secondary circuit 18.

The user device can be of the turbine type, such as an ORC group, i.e. having an organic-fluid Rankine cycle, or a steam turbine or even an absorption group.

Other types of user devices are however not excluded.

In the preferred embodiment, the plant 1 of the invention has been designed for the production of electrical energy for self-consumption.

Therefore, in the example of use of an ORC group, which can be activated either by liquid or a gaseous secondary fluid, according to the specific technology of the group itself, the proposed plant 1 is able to recover heat from the cooling sections of the kiln 2 (with all the inherent advantages already explained) then to be transformed into electrical energy in order to lower the very high consumption of the factories.

Further, the cooling water of the ORC groups, which acquires a temperature of approximately between 50 °C and 80 °C, can be used, for example, for the environmental heating, with a further recovery of energy.

Likewise, the cited absorption group can be used for the production of electrical energy or for the environmental conditioning in the summer months.

Further, in a case in which the thermodynamic device of the first circuit is a thermal evaporator 4, the steam produced thereby can have further and different uses from the activation of the user devices.

In still greater detail, in order to give an idea of the flexibility and the multi-functionality of the plant 1, note that in output from the thermal evaporator 4 induced in a module of the plant 1, and thus associated to a module of the kiln 2, a saturated steam can be produced to activate the user device, as well as superheated steam sent to the secondary exchanger of a further module of the plant 1 itself.

## Claims

1. A system for the recovery of heat, comprising:
an industrial firing kiln (2) for ceramic items, including a cooling section and a conveyor (5) for conveying ceramic items, which passes through said cooling section; and
a plant (1) for recovery of heat from said kiln (2), comprising: at least one primary circuit (11, 12) that includes at least an internal heat exchanger (13, 14), arranged in said cooling section of said kiln (2), and at least a primary process liquid that flows in said primary circuit (11, 12);
**characterized in that** the primary circuit (11, 12) comprises at least two internal exchangers (13, 14), a first internal heat exchanger (13),
being arranged above said conveyor (5) and a second internal heat exchanger (14) being arranged below said conveyor (5).

2. The system according to claim 1, wherein said primary circuit (11, 12) comprises at least one external exchanger (3) which can be arranged externally of said kiln (2).

3. The system according to claim 1, wherein said primary circuit (11, 12) comprises at least one thermal evaporator (4) able to be arranged externally of said kiln (2).

4. The system according to at least one of the preceding claims, wherein said primary liquid comprises water that is superheated upon its passage in said exchanger.

5. The system according to at least one of the preceding claims, wherein said primary liquid comprises molten salts.

6. The system according to claim 2 or claim 3, comprising a secondary circuit (18) that is connected to said external exchanger (3) or to said evaporator (4) of the primary circuit (11, 12).

7. The system according to the preceding claim, wherein a secondary process fluid flows in said secondary circuit (18), the secondary process fluid being selected from among: saturated steam, superheated steam, diathermic oil or superheated water.

8. The system according to claim 6 or claim 7, comprising a plurality of primary circuits (11, 12) associated in parallel by means of said secondary circuit (18).

9. The system according to at least one of claims 6 to 8, comprising at least one utilizer device that is supplied by the secondary circuit (18).

10. The system according to the preceding claim, wherein said utilizer device is a turbine type of device.

11. The system according to claim 9, wherein the utilizer device is an absorption unit.

12. The system according to at least one of the preceding claims, wherein the firing kiln (2) comprises a plurality of cooling sections, each of which being associated with a respective primary circuit (11,12).

## Patentansprüche

1. System zur Rückgewinnung von Wärme, umfassend:
einen industriellen Brennofen (2) für Keramikgegenstände, enthaltend einen Kühlabschnitt und einen Förderer (5) zum Fördern von Keramikgegenständen,
der durch diesen Kühlabschnitt verläuft; und
eine Anlage (1) zur Rückgewinnung von Wärme aus dem Ofen (2), umfassend:
mindestens einen Primärkreislauf (11, 12), der mindestens einen internen Wärmeaustauscher (13, 14) enthält, der in dem Kühlabschnitt des Ofens (2) angeordnet ist und mindestens eine Primärprozessflüssigkeit, die in dem Primärkreislauf (11, 12) fließt;
**dadurch gekennzeichnet, dass** der Primärkreislauf (11, 12) mindestens zwei interne Austauscher (13, 14) umfasst, wobei ein erster interner Wärmeaustauscher (13) über dem Förderer (5) angeordnet ist und ein zweiter interner Wärmeaustauscher (14) unter dem Förderer (5) angeordnet ist.

2. System nach Anspruch 1, wobei der Primärkreislauf (11, 12) mindestens einen externen Austauscher (3) umfasst, der außerhalb des Ofens (2) angeordnet sein kann.

3. System nach Anspruch 1, wobei der Primärkreislauf (11, 12) mindestens einen thermischen Verdampfer (4) umfasst, der in der Lage ist, außerhalb des Ofens (2) angeordnet zu werden.

4. System nach mindestens einem der vorhergehenden Ansprüche, wobei die Primärflüssigkeit Wasser umfasst, das bei seinem Durchgang in dem Austauscher überhitzt wird.

5. System nach mindestens einem der vorhergehenden Ansprüche, wobei die Primärflüssigkeit geschmolzene Salze umfasst.

6. System nach Anspruch 2 oder Anspruch 3, umfassend einen Sekundärkreislauf (18), der mit dem externen Austauscher (3) oder dem Verdampfer (4) des Primärkreislaufes (11, 12) verbunden ist.

7. System nach dem vorhergehenden Anspruch, wobei ein sekundäres Prozessfluid in dem Sekundärkreislauf (18) fließt, wobei das sekundäre Prozessfluid ausgewählt ist aus: Sattdampf, überhitztem Dampf, diathermischem Öl oder überhitztem Wasser.

8. System nach Anspruch 6 oder Anspruch 7, umfassend eine Vielzahl an Primärkreisläufen (11, 12), die mittels des Sekundärkreislaufes (18) parallelgeschaltet sind.

9. System nach mindestens einem der Ansprüche 6 bis 8, umfassend mindestens eine Verwertervorrichtung, die vom Sekundärkreislauf (18) versorgt wird.

10. System nach dem vorhergehenden Anspruch, wobei die Verwertervorrichtung eine Vorrichtung vom Turbinentyp ist.

11. System nach Anspruch 9, wobei die Verwertervorrichtung eine Absorptionseinheit ist.

12. System nach mindestens einem der vorhergehenden Ansprüche, wobei der Brennofen (2) eine Vielzahl an Kühlabschnitten umfasst, von denen ein jeder mit einem jeweiligen Primärkreislauf (11, 12) assoziiert ist.

## Revendications

1. Système de récupération de chaleur, comprenant:
un four de cuisson (2) industriel pour des articles en céramique, incluant une section de refroidissement et un convoyeur (5) servant à convoyer des articles en céramique, passant à travers ladite section de refroidissement; et
un équipement (1) permettant la récupération de chaleur dudit four (2), comprenant: au moins un circuit primaire (11, 12) incluant au moins un échangeur de chaleur (13, 14) interne, disposé dans ladite section de refroidissement dudit four (2), et au moins un liquide de traitement primaire s'écoulant dans ledit circuit primaire (11, 12);
**caractérisé en ce que** le circuit primaire (11, 12) comprend au moins deux échangeurs internes (13, 14), un premier échangeur de chaleur interne (13) étant disposé au-dessus dudit convoyeur (5) et un second échangeur de chaleur interne (14) étant disposé en dessous dudit convoyeur (5).

2. Système selon la revendication 1, dans lequel ledit circuit primaire (11, 12) comprend au moins un échangeur externe (3) pouvant être disposé à l'extérieur dudit four (2).

3. Système selon la revendication 1, dans lequel ledit circuit primaire (11, 12) comprend au moins un évaporateur thermique (4) pouvant être disposé à l'extérieur dudit four (2).

4. Système selon au moins une des revendications précédentes, dans lequel ledit liquide primaire comprend de l'eau étant surchauffée lors de son passage dans ledit échangeur.

5. Système selon au moins une des revendications précédentes, dans lequel ledit liquide primaire comprend des sels fondus.

6. Système selon la revendication 2 ou la revendication 3, comprenant un circuit secondaire (18) étant relié au dit échangeur externe (3) ou au dit évaporateur (4) du circuit primaire (11, 12).

7. Système selon la revendication précédente, dans lequel un fluide de traitement secondaire circule dans ledit circuit secondaire (18), le fluide de traitement secondaire étant choisi parmi: la vapeur saturée, la vapeur surchauffée, l'huile diathermique ou l'eau surchauffée.

8. Système selon la revendication 6 ou la revendication 7, comprenant une pluralité de circuits primaires (11, 12) associés en parallèle au moyen dudit circuit secondaire (18).

9. Système selon au moins une des revendications 6 à 8, comprenant au moins un dispositif utilisateur étant alimenté par le circuit secondaire (18).

10. Système selon la revendication précédente, dans lequel ledit dispositif utilisateur est un dispositif de type à turbine.

11. Système selon la revendication 9, dans lequel le dispositif utilisateur est une unité d'absorption.

12. Système selon au moins une des revendications précédentes, dans lequel le four de cuisson (2) comprend une pluralité de sections de refroidissement, chacune d'entre elles étant associée à un circuit primaire (11, 12) respectif.
